Europäisches Patentamt

European Patent Office

Office européen des brevets

(11) Publication number: **0 152 263**
**B1**

(12) **EUROPEAN PATENT SPECIFICATION**

(45) Date of publication of patent specification: **12.07.89**

(21) Application number: **85300760.7**

(22) Date of filing: **05.02.85**

(51) Int. Cl.⁴: **E 21 B 33/03,** B 22 F 7/08,
B 32 B 15/01

(54) Wellhead structure and method of producing same.

(30) Priority: **08.02.84 US 578153**

(43) Date of publication of application:
**21.08.85 Bulletin 85/34**

(45) Publication of the grant of the patent:
**12.07.89 Bulletin 89/28**

(84) Designated Contracting States:
**AT BE CH DE FR GB IT LI LU NL SE**

(56) References cited:
**EP-A-0 106 424
FR-A-2 337 000
GB-A-2 073 783
US-A-2 874 082
US-A-4 455 352**

**CHEMICAL ABSTRACTS, vol. 98, no. 8, 21st
February 1983, page 232, abstract no. 57932h,
Columbus, Ohio, US; Kh.T. KAKHRAMANOV,
et al.: "Study of the galling resistance of
materials and coatings on parts of gate valves
of wellhead equipment", & KHIM. NEFT.
MASHINOSTR. 1982, (10), 30-1**

(73) Proprietor: **CAMERON IRON WORKS, INC.
13013 Northwest Freeway Northwest Crossing
Houston, TX 77040 (US)**

(72) Inventor: **Raymond, Edward Lee
10515 Jay Creek
Houston Texas 77070 (US)**
Inventor: **Byrd, James Donald
14223 Ravenhurst
Houston Texas 77070 (US)**
Inventor: **Bednarowicz, Thomas A.
9519 Magnolia Ridge
Houston Texas 77044 (US)**

(74) Representative: **Smith, Norman Ian et al
F.J. CLEVELAND & COMPANY 40-43 Chancery
Lane
London WC2A 1JQ (GB)**

Courier Press, Leamington Spa, England.

## Description

This invention relates to clad structures, for example, wellhead structures.

Wellhead equipment used for drilling into deep sour wells must be capable of withstanding the hostile environments encountered which includes pressures greater than 15,000 psi (103421 KN/m²), temperatures greater than 300°F (149°C) and constituents including one or more of hydrogen sulfide, carbon monoxide, and chlorides. The American Petroleum Institute has established strength guidelines for use in constructing safe and interchangeable wellhead components. In order to meet the API requirements for construction of components in equipment for pressure ratings of 15,000 psi (103421 KN/m²) or more, the materials used must have greater than a 75,000 psi (517107 KN/m²) yield strength, 100,000 psi (689476 KN/m²) tensile strength, 17 percent elongation, and 35 percent reduction of area in as measured by a room temperature tensile test.

Alloys such as Inconel 625, Hastalloy C-276 and MP 35N which can withstand such corrosive environments do not usually possess the required yield strength of 75,000 psi (517107 KN/m²), and are cold worked to obtain higher strength in tubular applications. Also these alloys are very expensive and almost impossible to fabricate into large wellhead equipment.

There have been many efforts to provide structures having a composite material that would be resistant to a highly corrosive, high pressure, high temperature environment by providing a corrosion resistant material combined with a high strength base material in which the corrosion resistant material is so integrated with the base material that it may be considered as a load bearing part of the composite structure when making strength calculations. Prior to the present invention fully wrought clad structures suitable for containing high pressure, high temperature highly corrosive environments did not have an interface of sufficient strength and ductility to allow the clad material to be considered as a part of the base material in design calculations. It is believed that the reason for the weakness of the interface portion of prior clad structures has resulted from the carbide precipitation in the interface.

U.S. Patent No. 4,145,481 to D. K. Gupta et al discloses corrosion resistant metal articles produced by a hot isostatic pressure process utilising a superalloy which is stated to be IN792+Hf, as the base material which is plasma spray coated with an overlay of CoCrAlY and then aluminised by pack cementation prior to being subjected to hot isostatic pressure. Such overlay would not qualify under API Type III to be used in the strength calculations with the base material.

U.S. Patent No. 4,178,417 to T. Oda et al discloses a clad steel material wherein a low carbon steel base metal is bonded to an austenitic stainless steel, nickel or nickel alloy by a rolling or explosion process.

EP—A—0106426 (document according to Article 54(3) EPC) describes a clad structure comprising a body typically formed of steel and a lining formed from a powdered metal which is a corrosion resistant material.

GB—A—2073783 describes a clad structure comprising a body of martensitic nickel steel alloy having openings therein which are lined with an austenitic corrosion resistant nickel base alloy as defined in the precharacterising part of claim 1.

The present invention provides an improved clad structure suitable for use in wellheads on deep sea wells.

According to the present invention there is provided a clad structure comprising a body of martensitic nickel steel alloy having openings therein and an austenitic corrosion resistant nickel base alloy lining the openings of said body, said lining having been formed from powdered metal consolidated under a pressure of approximately 15000 psi (103421 KN/m²) and a temperature of approximately 2000°F (1093°C) for a period of 1-3/4 to 4 hours, characterised in that said martensitic alloy is 2-1/4 chrome, 1 molybdenum nickel steel alloy having 0.08—0.15 carbon, 0.40—0.60 manganese, up to 0.030 phosphorus, up to 0.030 sulfur, 0.15—0.50 silicon, 2.00—2.50 chromium, up to 0.50 nickel, 0.90—1.10 molybdenum and up to 0.05 aluminium and said austenitic alloy is Inconel 625 type nickel base alloy having up to 0.10 carbon, up to 0.50 manganese, up to 5.0 ion, up to 0.015 sulfur, up to 0.50 silicon, 20.0—23.0 chromium, up to 0.40 aluminium, up to 0.40 titanium, 3.40 to 4.10 niobium, 8.0 to 10 molybdenum and the balance being nickel, said body with said cladding lining said body openings being age hardened so that the yield strength and ductility of said body, said cladding and across the interface between said body and said cladding are all greater than 75000 psi (517107 KN/m²) in yield strength and ten percent in ductility after said age hardening.

The clad structure can be produced by a method which includes providing a layer of powdered cladding material adjacent the surface of the base material which is to be cladded, the base material having less than 15 points of carbon at the surface to be clad and the cladding material being a corrosive resistant alloy, subjecting the base material and the cladding material to pressure and heating of approximately 15,000 psi (103421 KN/m²) and 2,000°F (1093°C) and holding the materials at such temperature for a period of two hours and then cooling the material and reducing the pressure thereon.

The invention will be described now by way of example only with particular reference to the accompanying drawings. In the drawings:

Figure 1 is a photomicrograph of a section through the interface of a hip clad steel of the prior art taken at a magnification of 500×.

Figure 2 is a photomicrograph of a section through the interface of an improved hip clad steel in accordance with the present invention taken at a magnification of 500×.

2

EP 0 152 263 B1

Figure 3 is a sectional view of a valve structure which illustrates the manner in which corrosion resistant material is bonded within the base material.

Figure 4 is a graph illustrating the effect of yield strength and tensile strength of two types of Inconel 625 responsive to tempering temperatures.

Figure 5 is a graph of the effect on tensile and yield strength of the temperatures of tempering.

Figures 6, 7 and 8 are graphs showing the response of the alloys to heat treatment.

Figures 9 and 9A are photographs of two types of failure of tensile specimen.

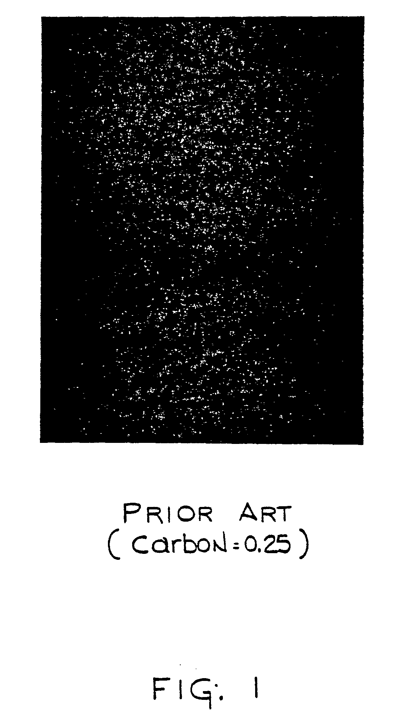

Figure 1 illustrates the microstructure of a clad steel at the interface between the base material which is a 2-1/4 Cr, 1 Mo alloy steel or an AISI 4130 steel and the clad material which is Inconel Alloy 625. The interface between the base material and the cladding material is near the bottom in the figure, and the dark particles above the interface are the carbide ($Cr_{23}C_6$) precipitants which cause the interface to be brittle. The cladding material is not allowed to be considered in making strength calculations for a structure such as illustrated in Figure 1. Thus, if the cladding material is not considered in such strength calculations but only as a lining to protect against a corrosive environment then the resulting structure will be substantially larger than would be necessary if the structure did not contain a corrosive environment. This would necessitate redesign of API flanges and other associated equipment.

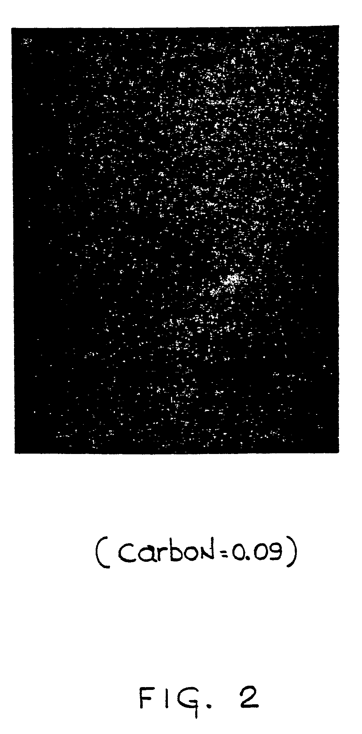

An example of clad steel in accordance with the present invention is shown in Figure 2. It should be noted that there are no large particles of precipitated carbide in the interface as contrasted with the large carbide particles shown in the clad steel represented in Figure 1. In the present clad structure, the preferred base material is a 2¼ chrome, 1 molybdenum nickel alloy steel with carbon from 8 to 15 points, all as shown in Table I.

TABLE I

| Component | Specification |
|---|---|
| Carbon | 0.08—0.15 |
| Manganese | 0.40—0.60 |
| Phosphorus | 0.030 Max. |
| Sulfur | 0.030 Max. |
| Silicon | 0.15—0.50 |
| Chromium | 2.00—2.50 |
| Nickel | 0.50 Max. |
| Molybdenum | 0.90—1.10 |
| Aluminum | 0.05 Max. (Internal) |

The preferred cladding material is Inconel 625 type nickel base alloy. The 625 type chemistry range used as the clad chemistry in this patent is as shown in Table II:

TABLE II

| | C | Mn | Fe | S | Si | Cr | Al | Ti | Nb+Ta | Mo | Ni |
|---|---|---|---|---|---|---|---|---|---|---|---|
| Min | | | | | | 20.0 | | | 3.40 | 8.0 | Bal |
| Max | .10 | .50 | 5.0 | .015 | .50 | 23.0 | .40 | .40 | 4.10 | 10.0 | Bal |

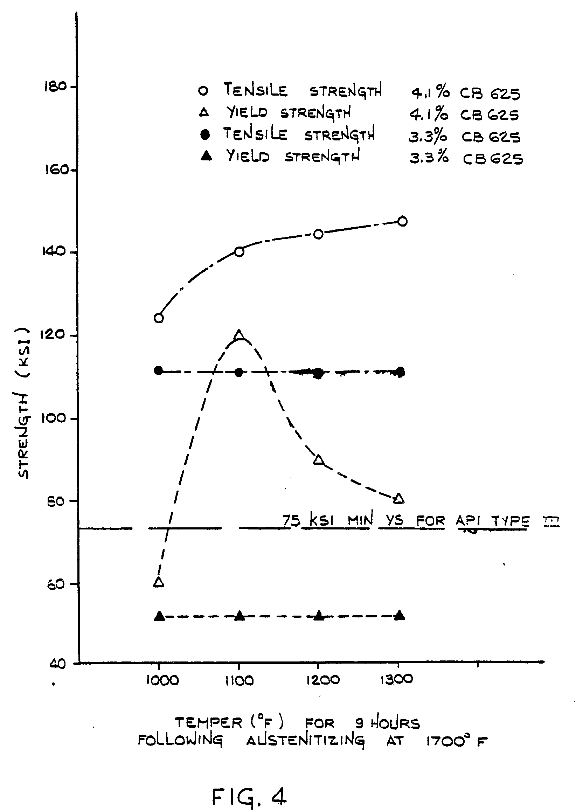

Certain restricted portions of the Inconel 625 chemistry can be precipitation strengthened and were used in this application because wellhead equipment cannot be cold worked to gain strength. This allows the alloy to be precipitation hardened as shown in Figure 4. Note that the chemistry range of 625 is 3.1 to 4.1 percent Nb (niobium) but only 3.5 to 4.1 percent Nb offers adequate properties. Lower niobium contents of this alloy do not allow the alloy to be precipitation hardened in such a time/temperature combination that allows for co-treatment of the steel as also shown in Figure 4.

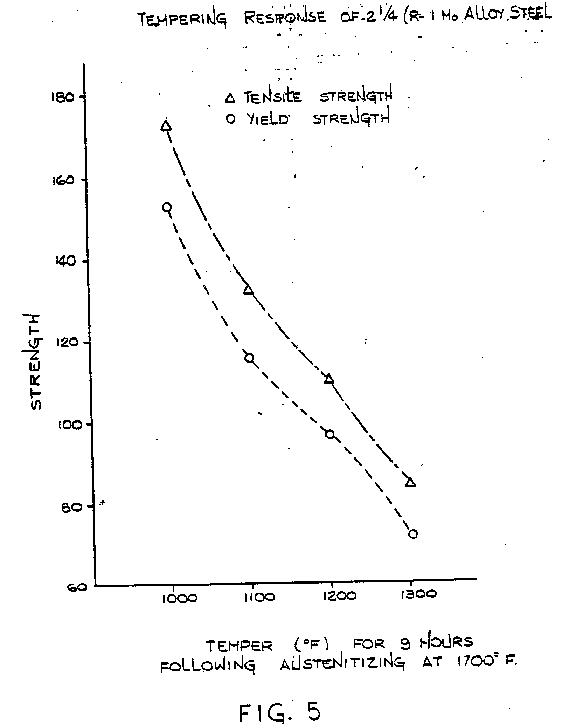

The base steel utilized is a martensitic strengthened one, such as 2-1/4 Cr-1Mo, which has the necessary hardenability in heavy sections to meet API Type III strengths while allowing use of lower carbon for strengthening. These alloys are readily fabricated into wellhead equipment shape by forging. The tempering response of this type steel is shown in Figure 5.

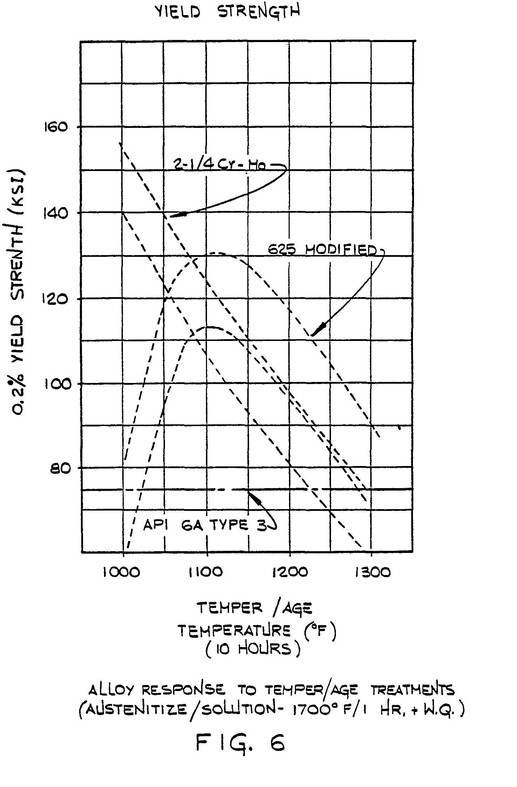

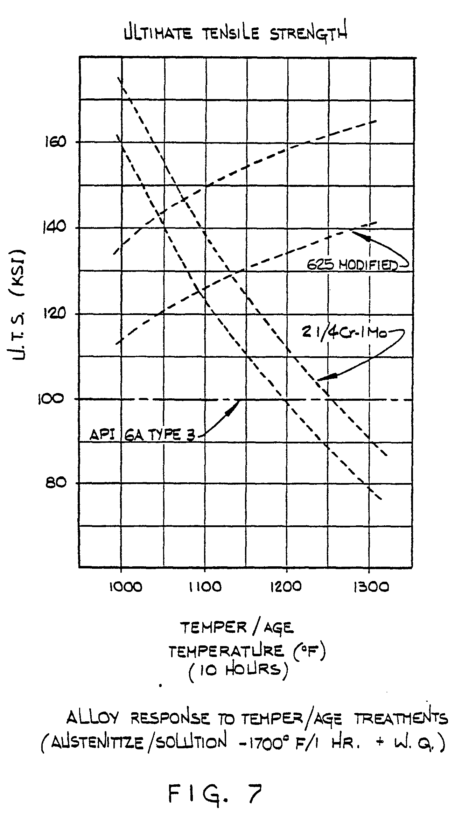

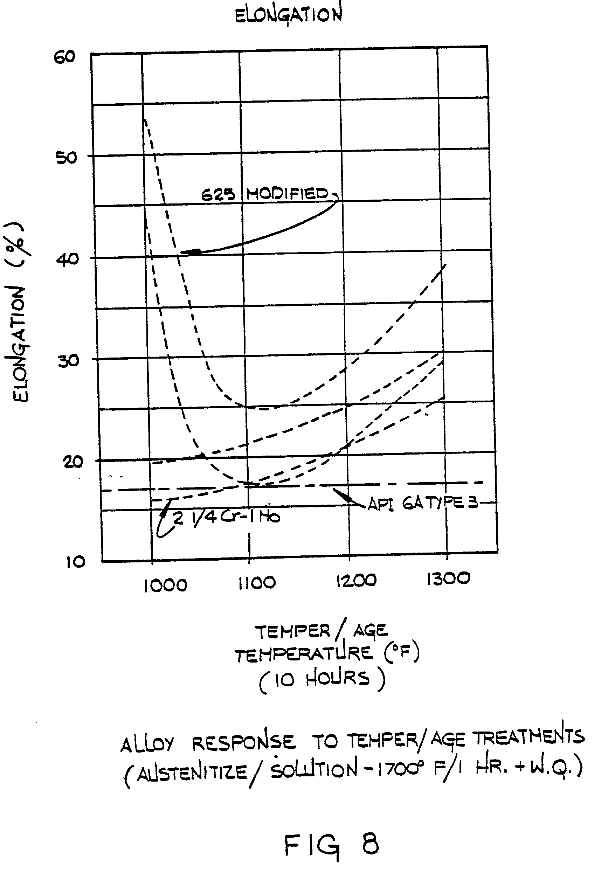

The joint response to heat treatment of a typical combination of the above alloys is shown in Figures 6, 7 and 8. The key here is that they are co-heat treatable to meet API Type III properties.

3

Another key to the process is the minimization of brittle chrome carbides forming at the clad-base interface.

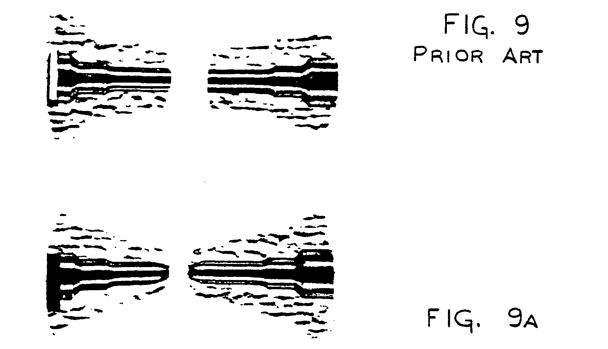

Figure 9 illustrates two types of tensile failure of tests conducted across the bond layer. Figure 9A shows a brittle failure near the bond layer which does not meet the 10 percent minimum elongation. The failure actually occurs in the 625 along a line of chromium carbides that form as a result of carbon migrating from the steel into the 625 during hipping and heat treatment.

The effect of carbon level in the base material on the formation of this brittle phase in the 625 is shown in Figures 1 and 2. It is shown that as the carbon is lowered from .25 (Figure 1) as in a 4130 type alloy to the 0.09 (Figure 2) percent level of the preferred base material the precipitation of this phase is minimised.

The cladding material is Inconel Alloy 625 wherein the Cb (columbium) content is between 3.5 and 4.1 to provide age hardenability. The present clad steel as described above was tested in tension in the base material, in the clad material and across the interface. Following is a summary of the results of typical testing:

|  | Yield strength ksi (MN/m²) | Ultimate strength ksi (MN/m²) | Elongate percent |
| --- | --- | --- | --- |
| Base material | 91 (627) | 105 (724) | 24 |
| Interface | 94 (648) | 105 (724) | 17 |
| Clad material | 92 (634) | 157 (1082) | 43 |

From these results it can be seen that the present clad steel maintains a yield strength above 75 ksi (517 MN/m²) with ductility above ten percent throughout its entire structure. Such properties fully meet the American Petroleum Institute API Type III specifications and thus valves and other oil and gas pressure containing structure to be used on wells containing corrosive fluids, such as hydrogen sulfide, sulfur dioxide or carbon dioxide, or combinations thereof can be made with the present clad structure. In this manner smaller valves and other wellhead structures can be used in compliance with the API specifications which materially reduces the cost and weight of each installation.

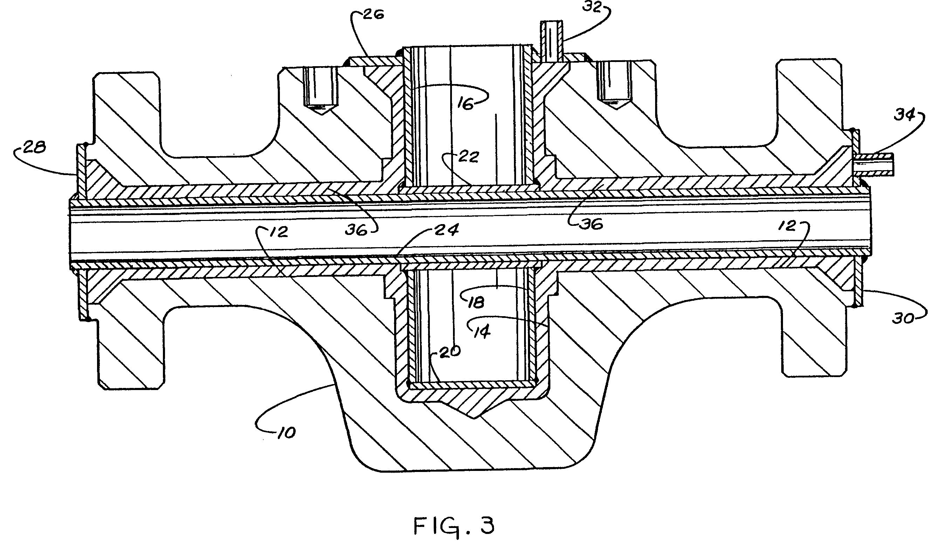

To illustrate a method of producing the present clad steel, valve body 10, shown in Figure 3, includes flow passages 12 and valve chamber 14 which are to be provided with a corrosion resistant lining. To prepare for the addition of metal powder, can 16, having thin tube 18, flat bottom 20 and thin sleeve 22 extending through the intermediate portion of tube 18 is inserted into valve chamber 14. Bottom 20 is sealed to the end of tube 18 as by welding and sleeve 22 is also sealed to tube 18 as by welding. Thin tube 24 is inserted through passages 12 and sleeve 22 as shown. Ring 26 is welded to the exterior of can 16 and to the exterior of body 10 and rings 28 and 30 are welded around the ends of tube 24 and to the exterior of body 10. Fill tube 32 extends through ring 26 and fill tube 34 extends through ring 30. The structure of can 16, tube 24 and their sealing rings 26, 28 and 30 provides a space 36 within the walls of passages 12 and chamber 14. This structure functions as a pressure transmitting yieldable mold or thin metal sealed structure as hereinafter explained. It is important that all of the welds in the structure of can 16, sleeve 22 and tube 24 be air tight and remain so during the consolidation step to exclude air from the heated metal powder.

Body structure 10 in the valve structure shown in Figure 3 would be the base steel alloy, preferably the specific alloy mentioned above and definitely having less than 15 points of carbon on all of its surfaces that are to receive the cladding or lining. As stated the steel alloy would have from 10 to 15 points or carbon but steel alloys having greater amounts of carbon may be used if all of the surfaces to receive the cladding or lining are subjected to a reduction or decarburization treatment which reduces the amount of carbon in these surfaces to the range specified above. In this manner the carbide precipitation is minimized and the strength of the interface is greatly improved.

When space 36 is ready to be filled, a vacuum is drawn thereon by connection of suitable means, such as a vacuum pump (not shown) to either or both of fill tubes 32 and 34. Sufficient vacuum should be drawn so that the amount of gases present in space 36 will not interfere with the formation of the desired consolidated metal lining.

Space 36 within body cavities 12 and 14 is then filled through fill tubes 32 and 34 with the powdered metal of the corrosion resistant cladding material as set forth above. It is recommended that body 10 be vibrated during filling of space 36 so that it is completely filled with the metal powder before proceeding to the next step. It is preferred that the material of can 16, tube 24 and rings 26, 28 and 30 be of the same material as the cladding material. Also, it is suggested that space 36 be sufficiently large to provide a lining of consolidated metal which is sufficiently thick to allow for machining to the final internal shape without any depressions or holidays in the finished lining.

After filling with powder the fill tubes 32 and 34 are closed and sealed. If desired, suitable valves (not shown) may be secured thereon so that they may be closed when the vacuum drawing step is finished. Such valves are recommended to be leak proof when subjected to forming conditions.

4

Thereafter, body 10 is placed in an autoclave (not shown) or other suitable device wherein it is subjected to forming temperature (2,000°F (1093°C) approximately) and pressure (15,000 psi (103421 KN/m²) approximately). Body 10 is maintained at such temperature and pressure for a period of two hours and then is allowed to cool. It is believed important that the time during which body 10 is maintained at forming conditions in the autoclave should be limited and that the cooling and heating steps should not be extended unnecessarily.

It is preferred that the length of the hip cycle and temperature be controlled to temperature less than 2200°F (1204°C) and a time of less than four hours at temperature. Such controls on the hip cycle plays a roll in limiting the formation of the chromium carbide.

During exposure to forming conditions in the autoclave, can 16 and tube 24, being yieldable, are expanded to compress the powdered metal against the walls of passages 12 and chamber 14. The heat and pressure cause the powdered metal to be consolidated into a solid lining within the body which is completely bonded to the body and has an interface of suitable physical properties as to allow the cladding or lining material to be considered in making the design calculations of the material needed to meet the specifications which are controlling for the particular structure.

Thus, the method provides the combining of martensitic and austenitic alloys giving strength and corrosion resistance.

## Claims

1. A clad structure comprising a body (10) of martensitic nickel steel alloy having openings (12, 14) therein and an austenitic corrosion resistant nickel base alloy lining the openings of said body, said lining having been formed from powdered metal consolidated under a pressure of approximately 15000 psi (103421 KN/m²) and a temperature of approximately 2000°F (1093°C) for a period of 1-3/4 to 4 hours, characterised in that said martensitic alloy is 2-1/4 chrome, 1 molybdenum nickel steel alloy having 0.08—0.15 carbon, 0.40—0.60 manganese, up to 0.030 phosphorus, up to 0.030 sulfur, 0.15—0.50 silicon, 2.00—2.50 chromium, up to 0.50 nickel, 0.90—1.10 molybdenum and up to 0.05 aluminium and said austenitic alloy is Inconel 625 type nickel base alloy having up to 0.10 carbon, up to 0.50 manganese, up to 5.0 ion, up to 0.015 sulfur, up to 0.50 silicon, 20.0—23.0 chromium, up to 0.40 aluminium, up to 0.40 titanium, 3.40 to 4.10 niobium, 8.0 to 10 molybdenum and the balance being nickel, said body with said cladding lining said body openings being age hardened so that the yield strength and ductility of said body, said cladding and across the interface between said body and said cladding are all greater than 75000 psi (517107 KN/m²) in yield strength and ten percent in ductility after said age hardening.

2. A clad structure according to claim 1, characterised in that said body openings (12, 14) are intersection bores extending therethrough.

3. A clad structure according to claim 1 or claim 2, wherein said structure is a wellhead structure.

## Patentansprüche

1. Verbundstruktur, umfassend: einen mit Öffnungen (12, 14) versehenen Körper (10) aus einer martensitischen Nickel-Stahl-Legierung und einer die Öffnungen belegenden austenitischen, korrosionsbeständigen Nickelbasislegierung, wobei der Belag aus pulverisiertem Metall gebildet ist, das unter einem Druck von etwa 15 000 psi (103421 KN/m²) und bei einer Temperatur von etwa 2000°F (1093°C) 1-3/4 bis 4 Stunden lang verdichtet wurde, dadurch gekennzeichnet, daß die martensitische Legierung eine 2-1/4-Chrom, 1-Molybdän-Nickel-Stahllegierung ist mit 0,08—0,15 Kohlenstoff, 0,40—0,60 Mangan, bis zu 0,030 Phosphor, bis zu 0,030 Schwefel, 0,15—0,50 Silicium, 2,00—2,50 Chrom, bis zu 0,50 Nickel, 0,90—1,10 Molybdän und bis zu 0,05 Aluminium, und daß die austenitische Legierung eine Nickelbasislegierung von Typ Inconel 625 ist, die bis zu 0,10 Kohlenstoff, bis zu 0,50 Mangan, bis zu 5,0 Eisen, bis zu 0,015 Schwefel, bis zu 0,50 Silicium, 20,0—23,0 Chrom, bis zu 0,40 Aluminium, bis zu 0,04 Titan, 3,40—4,10 Niob, 8,0—10 Molybdän und in übrigen Nickel enthält, wobei der Körper mit dem die Körperöffnungen belegenden Überzug ausgelagert wird, so daß die Streckgrenze und die Verformbarkeit des Körpers, des Überzugs und an der Grenzfläche zwischen Körper und Überzug sämtlich größer als 75 000 psi (517107 KN/m²) in der Streckgrenze und 10% in der Verformbarkeit nach dem Auslagern sind.

2. Verbundstruktur nach Anspruch 1, dadurch gekennzeichnet, daß die Körperöffnungen (12, 14) sich durch den Körper erstreckende, sich schneidende Borhungen sind.

3. Verbundstruktur nach Anspruch 1 oder Anspruch 2, bei der die Struktur eine Bohrlochkopf-Struktur ist.

## Revendications

1. Structure plaquée comprenant un corps (10) en un alliage martensitique d'acier au nickel dans lequel sont aménagées des ouvertures (12, 14), et un alliage austénitique, résistant à la corrosion, à base de nickel, revêtant intérieurement les ouvertures dudit corps, ledit revêtement intérieur ayant été formé à partir de poudre métallique compactée sous une pression d'environ 103 421 kN/m² (15 000 psi) et à une température d'environ 1093°C (2000°F) pendant une période de 1-3/4 à 4 heures, caractérisée en ce que ledit alliage martensitique est un alliage d'acier au nickel à 2-1/4 chrome, 1 molybdène, contenant: 0,08—0,15 carbone, 0,40—0,60 manganèse, jusqu'à 0,030 phosphore, jusqu'à 0,030 soufre, 0,15—0,50 silicium, 2,00—2,50 chrome, jusqu'à 0,50 nickel, 0,90—1,10 molybdène et jusqu'à 0,05 aluminium, et ledit alliage austénitique est un alliage à base de nickel, du type Inconel 625, contenant: 0,10 carbone, jusqu'à 0,50 manganèse, jusqu'à 5,0 fer, jusqu'à 0,015 soufre, jusqu'à 0,50 silicium, 20,0—23,0 chrome, jusqu'à 0,40 aluminium, jusqu'à 0,40 titane, 3,40 à 4,10 niobium, 8,0 à 10 molybdène, le reste étant du nickel, ledit corps avec ledit placage recouvrant intérieurement lesdites ouvertures aménagées dans le corps, ayant subi un vieillissement de telle sorte que, après ce vieillissement, ledit corps, ledit placage et l'interface entre ledit corps et ledit placage présentent tous une limite élastique supérieure à 517 107 kN/m² (75 000 psi) et une ductilité supérieure à dix pour cent.

2. Structure plaquée selon la revendication 1, caractérisée en ce que lesdites ouvertures (12, 14) aménagées dans le corps sont des alésages d'intersection traversants.

3. Structure plaquée selon la revendication 1 ou la revendication 2, dans laquelle ladite structure est une structure de tête de puits.

PRIOR ART
( CarboN = 0.25 )

FIG. 1

( carbon = 0.09 )

FIG. 2

FIG. 3

FIG. 4

TEMPERING RESPONSE OF 2 1/4 CR-1 Mo ALLOY STEEL

△ TENSILE STRENGTH
O YIELD STRENGTH

STRENGTH

TEMPER (°F) FOR 9 HOURS
FOLLOWING AUSTENITIZING AT 1700° F.

FIG. 5

5

EP 0 152 263 B1

YIELD STRENGTH

ALLOY RESPONSE TO TEMPER/AGE TREATMENTS
(AUSTENITIZE/SOLUTION- 1700° F/1 HR, + W.Q.)

FIG. 6

ULTIMATE TENSILE STRENGTH

TEMPER / AGE
TEMPERATURE (°F)
(10 HOURS)

ALLOY RESPONSE TO TEMPER/AGE TREATMENTS
(AUSTENITIZE/SOLUTION -1700° F/1 HR. + W.Q.)

FIG. 7

ELONGATION

ALLOY RESPONSE TO TEMPER/AGE TREATMENTS
(AUSTENITIZE / SOLUTION - 1700° F/1 HR. + W.Q.)

FIG 8

FIG. 9
PRIOR ART

FIG. 9A